(19) Europäisches Patentamt
European Patent Office
Office européen des brevets

(11) Veröffentlichungsnummer: **0 387 589 B1**

(12) # EUROPÄISCHE PATENTSCHRIFT

(45) Veröffentlichungstag der Patentschrift: **27.04.94**

(51) Int. Cl.[5]: **C09B 62/01**, D06P 3/66, D06P 3/10

(21) Anmeldenummer: **90103742.4**

(22) Anmeldetag: **26.02.90**

Die Akte enthält technische Angaben, die nach dem Eingang der Anmeldung eingereicht wurden und die nicht in dieser Patentschrift enthalten sind.

(54) **Reaktivfarbstoffe, die drei reaktive Gruppen aufweisen.**

(30) Priorität: **13.03.89 DE 3908074**

(43) Veröffentlichungstag der Anmeldung:
**19.09.90 Patentblatt 90/38**

(45) Bekanntmachung des Hinweises auf die Patenterteilung:
**27.04.94 Patentblatt 94/17**

(84) Benannte Vertragsstaaten:
**CH DE FR GB IT LI**

(56) Entgegenhaltungen:
**DE-A- 2 748 965**
**DE-A- 2 748 966**
**US-A- 3 040 021**
**US-A- 3 544 546**

**Englische Übersetzung von JP-A-60-69163**

(73) Patentinhaber: **BASF Aktiengesellschaft**
**Carl-Bosch-Strasse 38**
**D-67063 Ludwigshafen(DE)**

(72) Erfinder: **Loeffler, Hermann, Dr.**
**Haydnstrasse 23**
**D-6720 Speyer(DE)**
Erfinder: **Patsch, Manfred, Dr.**
**Fritz-Wendel-Strasse 4**
**D-6706 Wachenheim(DE)**

EP 0 387 589 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft neue Reaktivfarbstoffe gemäß Anspruch 1, die drei reaktive Gruppen aufweisen und der Formel I

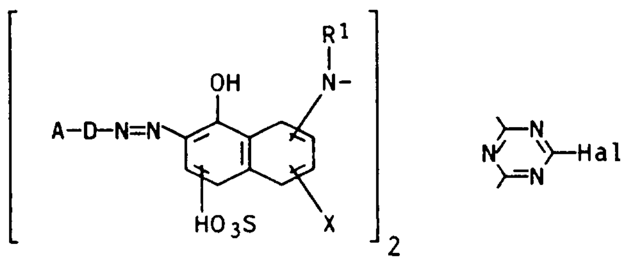

(I)

gehorchen, in der

- $R^1$ Wasserstoff, Methyl oder Ethyl,
- X Wasserstoff oder Hydroxysulfonyl,
- Hal Fluor oder Chlor,
- D Phenylen, durch Carboxy oder Hydroxysulfonyl ein- oder zweifach substituiertes Phenylen oder durch Hydroxysulfonyl ein- oder zweifach substituiertes Naphthylen und
- A eine reaktive Gruppe, die mit den Hydroxygruppen oder Stickstoff enthaltenden Gruppen der zu behandelnden Substrate nur substitutiv reagiert, oder der Rest A-D zusammen eine benzoanellierte reaktive Gruppe, die mit den Hydroxygruppen oder Stickstoff enthaltenden Gruppen der zu behandelnden Substrate nur substitutiv reagiert, bedeuten.

Aus der DE-A-2 748 965 und der DE-A- 2 748 966 sind bereits Reaktivfarbstoffe bekannt, die denen der Formel I ähnlich sind. Sie unterscheiden sich jedoch darin, daß dort die reaktive Gruppe A mit den Hydroxygruppen oder Stickstoff enthaltenden Gruppen der zu behandelnden Substrate additiv reagiert.

Weiterhin sind in der JP-A-69 163/1985 Reaktivfarbstoffe beschrieben, die sich von denen der Formel I darin unterscheiden, daß dort die reaktive Gruppe A einen Doppelanker darstellt, der mit den Hydroxygruppen oder Stickstoff enthaltenden Gruppen der zu behandelnden Substrate sowohl additiv als auch substitutiv reagiert.

Es hat sich gezeigt, daß die Farbstoffe des Standes der Technik noch anwendungstechnische Mängel aufweisen. So zeigen beispielsweise Farbstoffe gemäß der JP-A-69 163/1985 entweder mangelhafte Beständigkeit gegen alikalische und/oder peroxidhaltige Waschmittel oder sie fixieren bei der üblichen Färbetemperatur mit zu geringer Farbausbeute (siehe J. Soc. Dyers Col. Vol. 104, S. 425 - 431, 1988).

Aufgabe der vorliegenden Erfindung war es daher, neue Reaktivfarbstoffe bereitzustellen, die vorteilhafte Eigenschaften, insbesondere eine hohe Fixierausbeute sowie hohe Naßechtheiten, aufweisen.

Demgemäß wurden die eingangs näher bezeichneten Reaktivfarbstoffe der Formel I gefunden.

Daß die reaktive Gruppe A mit den Hydroxygruppen oder Stickstoff enthaltenden Gruppen der zu behandelnden Substrate substitutiv reagiert, bedeutet, daß die Austrittsgruppen oder -atome (z.B. Fluor oder Chlor) in der reaktiven Gruppe A durch die betreffenden Gruppen in den Substraten, z.B. durch die Hydroxygruppen der Cellulose, gemäß folgendem Schema substituiert werden:

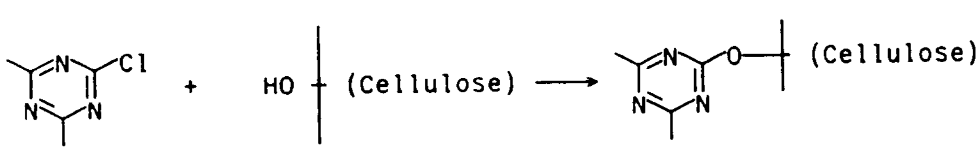

Reste D sind z.B.

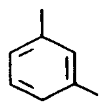 , 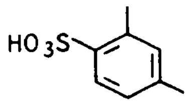 , 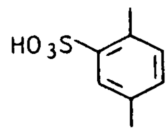 , 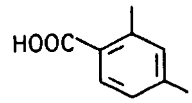 ,

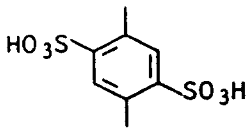 , 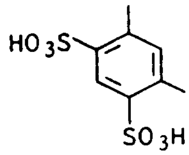 , 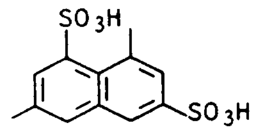 oder

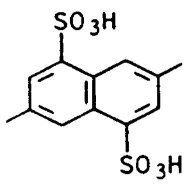 .

Reaktive Gruppen A, die mit den Hydroxygruppen oder Stickstoff enthaltenden Gruppen der zu behandelnden Substrate nur substitutiv reagieren, sind z.B. halogensubstituierte Reste des 1,3,5-Triazins, Chinoxalins, Phthalazins, Pyrimidins oder des Pyridazons. Beispielhaft seien die folgenden Reste genannt:

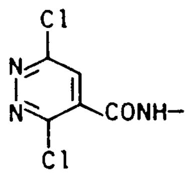 , 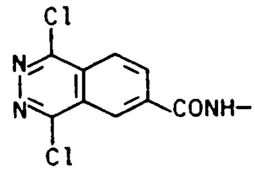 , 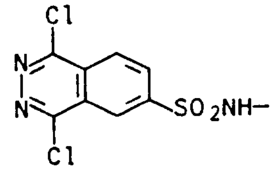

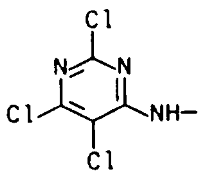 , 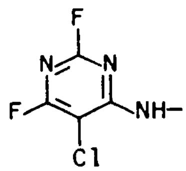 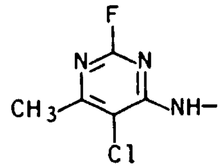 , 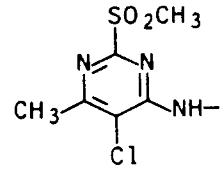 ,

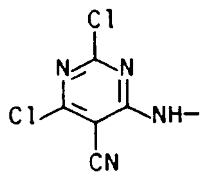 , 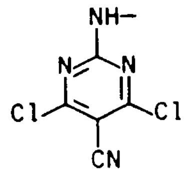 , 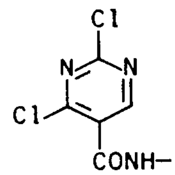 ,

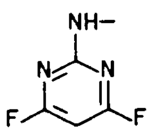 , 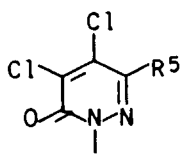 , 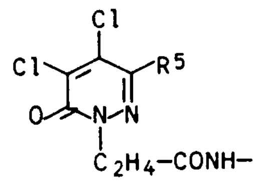 ,

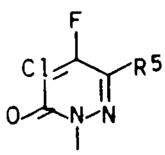 , 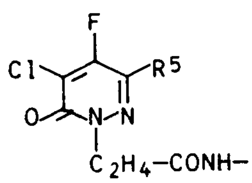 , 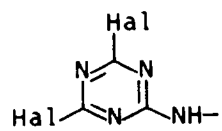 ,

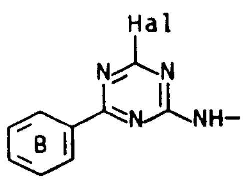 , oder 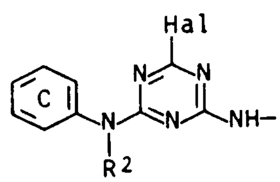 ,

wobei Hal für Fluor oder Chlor, $R^5$ für Wasserstoff oder Nitro und $R^2$ für Wasserstoff oder $C_1$-$C_4$-Alkyl stehen und die Ringe B und C jeweils durch einen Hydroxysulfonylrest und der Ring C davon unabhängig durch Chlor, Nitro, bis zu zwei Methoxygruppen oder bis zu drei $C_1$-$C_4$-Alkygruppen substituiert sein können.

Wenn der Rest A - D eine benzoanellierte reaktive Gruppe, die mit den Hydroxygruppen oder Stickstoff enthaltenden Gruppen der zu behandelnden Substrate substitutiv reagiert, bedeutet, so kommt z.B. der 2-Alkylsulfonylbenzthiazolrest in Betracht. Beispielhaft seien die Reste

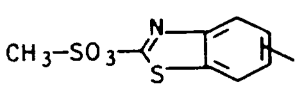 oder 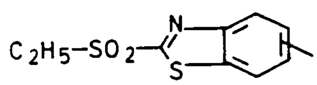

genannt.

Reste der Kupplungskomponente der Formel

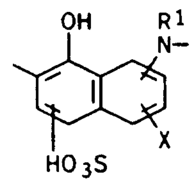

sind beispielsweise

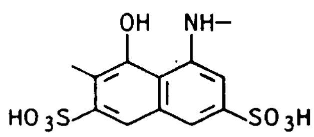 , 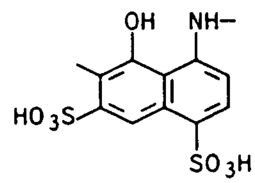 ,

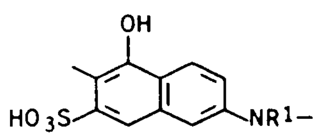 , 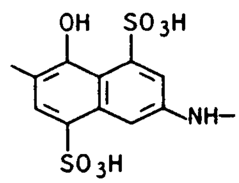 oder

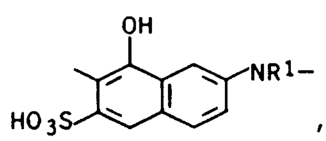 ,

wobei $R^1$ für
Wasserstoff, Methyl oder Ethyl steht.

Bevorzugt sind Reaktivfarbstoffe der Formel I, in der A einen Rest der Formel

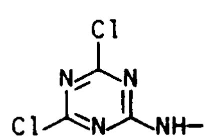 oder 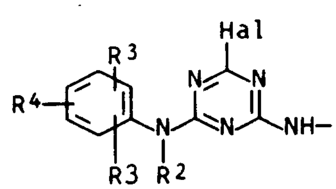

bedeutet,
wobei $R^2$ für Wasserstoff, $C_1$-$C_4$-Alkyl, $R^3$ für Wasserstoff, $C_1$-$C_4$-Alkyl oder $C_1$-$C_4$-Alkoxy, $R^4$ für Wasserstoff, $C_1$-$C_4$-Alkyl oder Hydroxysulfonyl und Hal für Fluor oder Chlor stehen.

Weiterhin bevorzugt sind Reaktivfarbstoffe der Formel I, in der D den Rest

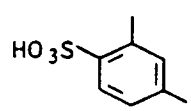 oder

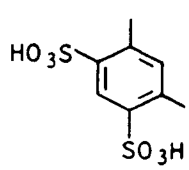

bedeutet.

Weiterhin bevorzugt sind Reaktivfarbstoffe der Formel I, in der der Rest

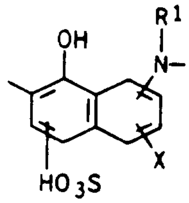

für

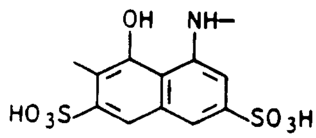 , 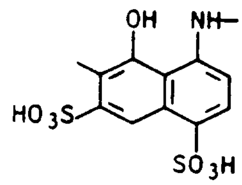 oder

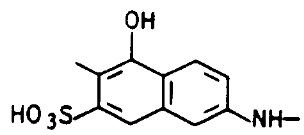

steht.

Besonders bevorzugt sind Reaktivfarbstoffe, die der Formel Ia

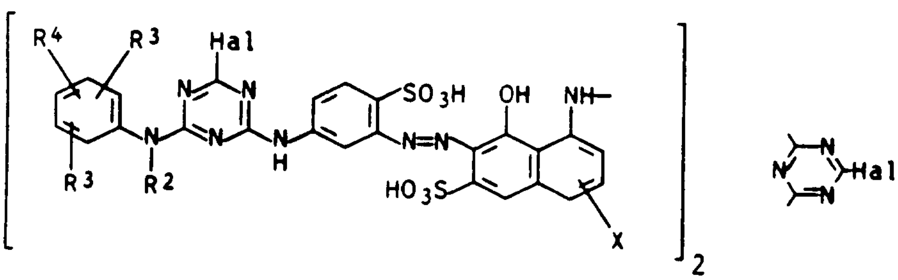 (Ia)

gehorchen, in der

- Hal Fluor oder Chlor,
- $R^2$ Wasserstoff oder $C_1$-$C_4$-Alkyl,
- X Wasserstoff oder Hydroxysulfonyl,
- $R^3$ Wasserstoff, $C_1$-$C_4$-Alkyl oder $C_1$-$C_4$-Alkoxy und
- $R^4$ Wasserstoff, $C_1$-$C_4$-Alkyl oder Hydroxysulfonyl bedeuten.

Weiterhin besonders bevorzugt sind Reaktivfarbstoffe, die der Formel Ib

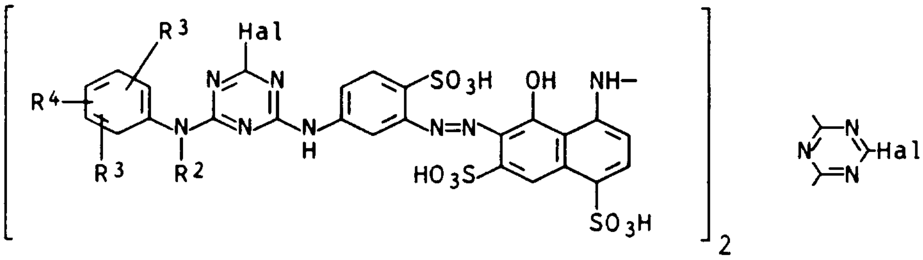 (Ib)

gehorchen, in der $R^2$, $R^3$, $R^4$ und Hal jeweils die obengenannte Bedeutung besitzen.
Insbesondere hervorzuheben sind Reaktivfarbstoffe der Formel Ia in der $R^2$ und $R^3$ jeweils Wasserstoff und $R^4$ Hydroxysulfonyl oder in der $R^2$ Wasserstoff, $R^3$ o,o'-$C_1$-$C_2$-Alkyl und $R^4$ Methyl oder Wasserstoff bedeuten.

Die Herstellung der neuen Reaktivfarbstoffe der Formel I erfolgt nach an sich bekannten Methoden. Beispielsweise kann man

a) ein Amin der Formel II

$A$-$D$-$NH_2$ (II),

in der A und D jeweils die obengenannte Bedeutung besitzen, diazotieren und mit einer Kupplungskomponente der Formel III

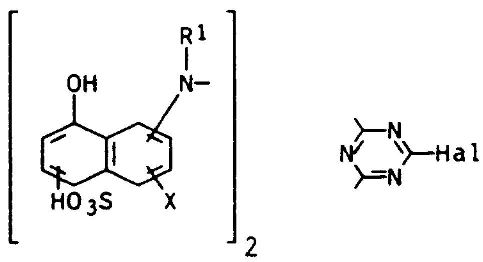 (III),

in der $R^1$, X und Hal jeweils die obengenannte Bedeutung besitzt, kuppeln.

Eine weitere Methode besteht beispielsweise darin, daß man

b) ein Amin der Formel IV

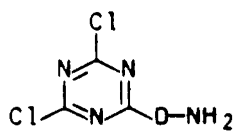 (IV),

in der D die obengenannte Bedeutung besitzt, diazotiert, mit einer Kupplungskomponente III kuppelt und anschließend gegebenenfalls noch mit einem Anilinderivat der Formel V

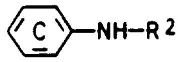 (V),

in der $R^2$ und der Ring C jeweils die obengenannte Bedeutung besitzt, umsetzt.

Eine weitere Methode besteht beispielsweise darin, daß man

c) den Farbstoff der Formel VI

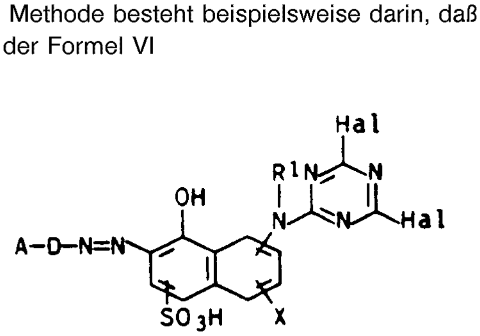 (VI),

in der Hal, A, D, $R^1$ und X jeweils die obengenannte Bedeutung besitzen, mit einem weiteren Farbstoff der Formel VII

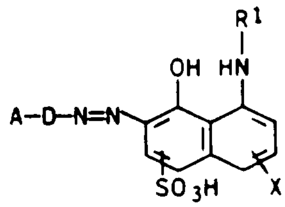

(VII),

in der A, D, R[1] und X jeweils die obengenannte Bedeutung besitzen, umsetzt.

Wenn man unsymmetrische Reaktivfarbstoffe der Formel I herstellen will, empfiehlt es sich, die Methode a) oder die Methode c) durchzuführen. So kann man z.B. bei a) eine Kupplungskomponente der Formel III verwenden, bei der zwei verschiedene Aminonaphtholsulfonsäuren an den Triazinring geknüpft sind. Bei c) ist es beispielsweise möglich, einen Farbstoff VII mit einer solchen Aminonaphtholsulfonsäure zu verwenden, die von der im Farbstoff der Formel VI enthaltenen verschieden ist.

Bevorzugt werden die erfindungsgemäßen Farbstoffe nach der Methode a) hergestellt.

Die neuen Reaktivfarbstoffe der Formel I eignen sich in vorteilhafter Weise zum Färben oder Bedrucken von Hydroxygruppen oder Stickstoff enthaltenden organischen Substraten. Solche Substrate sind beispielsweise Leder oder Fasermaterial, das überwiegend natürliche oder synthetische Polyamide oder natürliche oder regenerierte Cellulose enthält. Vorzugsweise eignen sich die neuen Farbstoffe zum Färben und Bedrucken von Textilmaterial auf der Basis von Baumwolle. Sie zeichnen sich dabei durch hohe Fixierausbeuten und hohe Naßechtheiten aus.

Die folgenden Beispiele sollen die Erfindung näher erläutern.

Beispiel 1

a) Die Lösung von 0,5 Mol 1-Aminonaphth-8-ol-3,6-disulfonsäure in 400 ml Wasser und 30 ml 50 gew.%iger Natronlauge ließ man in eine intensiv gerührte Mischung aus 96,0 g Cyanurchlorid, 500 ml Eiswasser und 2 ml 30 gew.%iger Salzsäure einfließen und rührte drei Stunden bei 5 bis 8 °C bis das Aminonaphthalin vollständig in Lösung und acyliert war. Dieser Lösung wurde nun erneut eine Lösung des Natriumsalzes der 1-Aminonaphth-8-ol-3,6-disulfonsäure in obiger Menge und Konzentration zugegossen und unter Erwärmung auf 20 bis 25 °C der pH-Wert durch Einstreuen von 105 g Natriumhydrogencarbonat auf 5 erhöht. Nach dreistündigem Rühren unter diesen Bedingungen und nach Verdünnung mit 1 000 ml Wasser war die Kondensation beendet. Die Fällung des gebildeten 2,6-[Bis(8-hydroxy-3,6-dihydroxysulfonylnapth-1-yl-amino]-4-chlor-s-triazin wurde mit 700 g Kochsalz vervollständigt. Dann wurde abgesaugt und mit einer 20 gew.%igen Kochsalzlösung gewaschen. Die Ausbeute an Rohprodukt betrug 95 %.

b) 20,3 g (0,05 Mol)
2-(N-Methyl-N-phenylamino)-4-chlor-6-(3'-amino-4'-hydroxysulfonylphenylamino)-s-triazin wurden mit Natriumhydrogencarbonat in 250 ml Wasser bei pH 7 gelöst und mit 15 ml einer 3,33 n Natriumnitritlösung versetzt. Die Diazotierung erfolgte durch langsames Eingießen dieser Lösung in 100 g Eis und 15 ml 30 gew.%ige Salzsäure. Nach einstündigem Rühren in der Eiskälte zerstörte man den Salpetrigsäureüberschuß mit Amidosulfonsäure und ließ die gelbliche, gallertige Lösung zu einer Aufschlämmung von 0,024 Mol der binären Kupplungskomponente a) in 250 ml Wasser, 100 g Eis und 15 g Natriumhydrogencarbonat, einfließen. Der gebildete und vollständig in Lösung befindliche Farbstoff der Formel

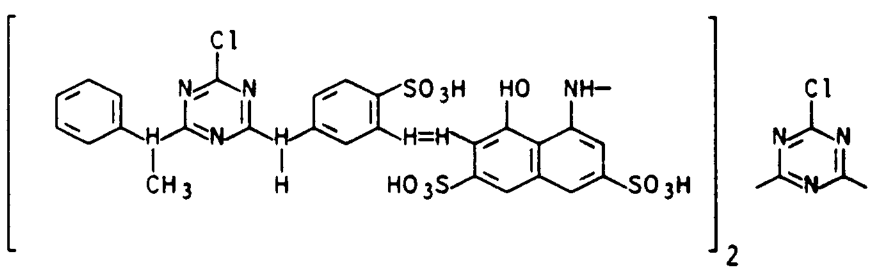

wurde mit 100 g Kochsalz ausgefällt, mit 3 gew.%iger Kochsalzlösung, dann mit Aceton gewaschen und bei 40 °C unter vermindertem Druck getrocknet.

Der so gewonnene Farbstoff färbt Cellulosematerialien aus alkalischem Bad und bei erhöhter Temperatur mit hoher Farbstoffausbeute in blaustichig roten Tönen mit guten Naßechtheiten.

Beispiel 2

23,6 g 2-(2'-Hydroxysulfonylphenylamino)-4-chlor-6-(3'-amino-4'-hydroxysulfonylphenylamino)-s-triazin wurden mit Natriumhydrogencarbonat in 300 ml Wasser bei pH 6 gelöst, mit 100 g Eis gekühlt und mit 15 ml einer 3,33 n Natriumnitritlösung versetzt. Durch Einstürzen von 15 ml 30 gew.%iger Salzsäure und einstündiges Nachrühren erfolgte die Diazotierung. Nachdem die überschüssige salpetrige Säure mit Amidosulfonsäure zerstört worden war, wurde analog Beispiel 1b auf 0,024 Mol 2,6-[Bis(8-hydroxy-3,4-hydroxysulfonylnaphth-1-ylamino)]-4-chlor-s-triazin gekuppelt, das gemäß Beispiel 1a aus zwei Äquivalenten 1-Aminonaphth-8-ol-3,4-di-sulfonsäure und einem Äquivalent Cyanurchlorid erhalten worden war.

Der gebildete und in Lösung befindliche Farbstoff der Formel

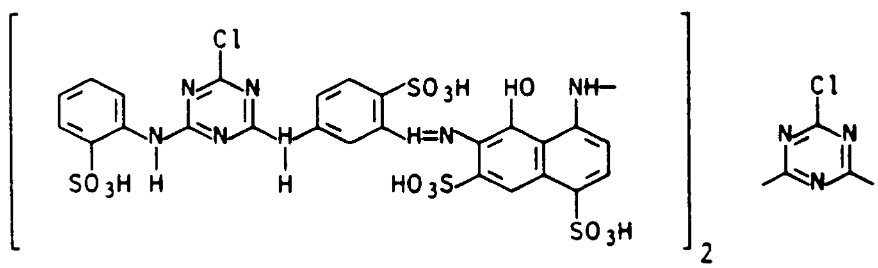

wurde mit 150 g Kochsalz ausgefällt, mit 15 gew.%iger Kochsalzlösung, dann mit Aceton gewaschen und bei 40 ° C unter vermindertem Druck getrocknet.

Er färbt Cellulosematerialien aus alkalischem Bad und bei erhöhter Temperatur mit sehr hoher Farbausbeute in neutralroten Tönen mit guten Naßechtheiten.

Die in der folgenden Tabelle 1 aufgeführten symmetrischen Farbstoffe der Formel

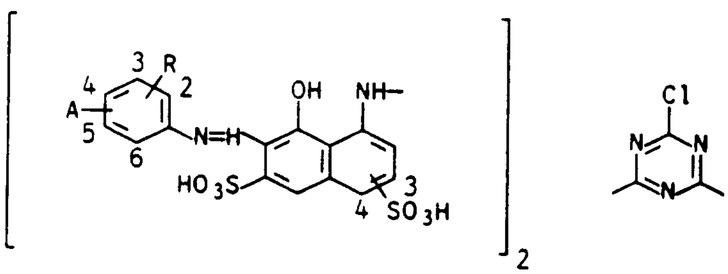

werden in analoger Weise erhalten. Auch sie weisen einen sehr hohen Fixiergrad und gute Naßechtheiten auf.

Tabelle 1

| Beisp. Nr. | A | R | 3-/4-$SO_3H$ | Farbton auf Baumwolle |
|---|---|---|---|---|
| 3 | 5- 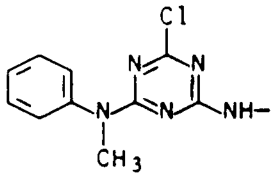 | 2-$SO_3H$ | 4 | neutralrot |
| 4 | 5- 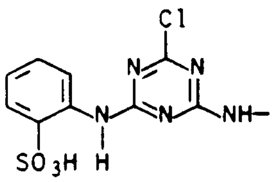 | 2-$SO_3H$ | 3 | blaust. rot |
| 5 | 5- 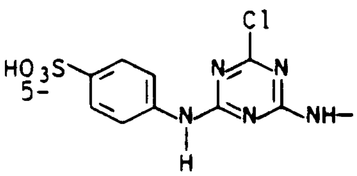 | 2-$SO_3H$ | 3 | blaust. rot |
| 6 | 5- 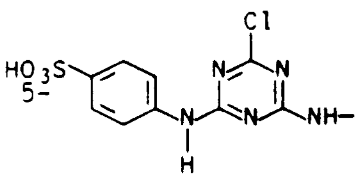 | 2-$SO_3H$ | 4 | neutralrot |
| 7 | 5- 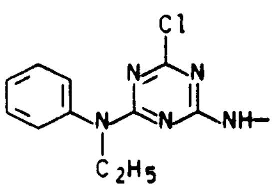 | 2-$SO_3H$ | 4 | neutralrot |
| 8 | 5- 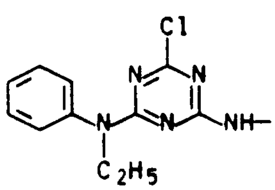 | 2-$SO_3H$ | 3 | blaust. rot |
| 9 | 5- 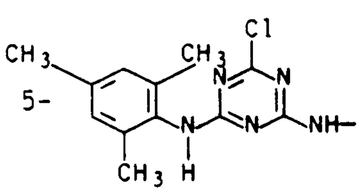 | 2-$SO_3H$ | 3 | blaust. rot |

Tabelle 1 (Forts.)

| Beisp. Nr. | | A | R | 3-/4-$SO_3H$ | Farbton auf Baumwolle |
|---|---|---|---|---|---|
| 10 | 5- | 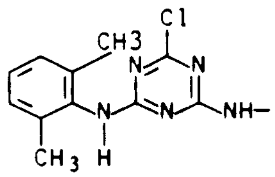 | 2-$SO_3H$ | 4 | neutralrot |
| 11 | 5- | 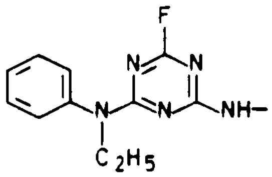 | 2-$SO_3H$ | 3 | blaust. rot |
| 12 | 5- | 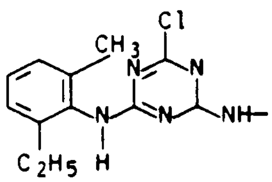 | 2-$SO_3H$ | 3 | blaust. rot |
| 13 | 5- | 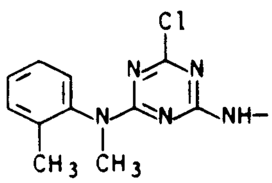 | 2-$SO_3H$ | 3 | blaust. rot |
| 14 | 5- | 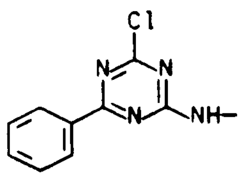 | 2-$SO_3H$ | 3 | blaust. rot |
| 15 | 5- | 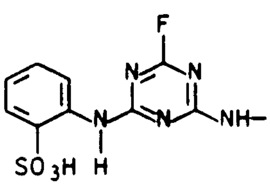 | 2-$SO_3H$ | 4 | neutralrot |

Tabelle 1 (Forts.)

| Beisp. Nr. | A | R | 3-/4-$SO_3H$ | Farbton auf Baumwolle |
|---|---|---|---|---|
| 16 | 5- 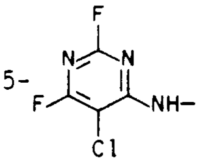 | 2-$SO_3H$ | 4 | neutralrot |
| 17 | 5- 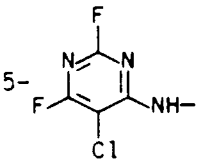 | 2-$SO_3H$ | 3 | blaust. rot |
| 18 | 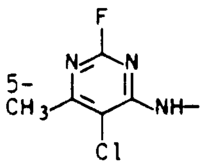 | 2-$SO_3H$ | 4 | neutralrot |
| 19 | 5- 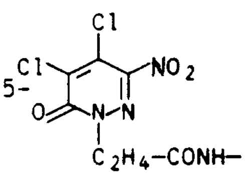 | 2-$SO_3H$ | 4 | neutralrot |
| 20 | 5- 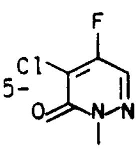 | 2-$SO_3H$ | 3 | blaust. rot |
| 21 | 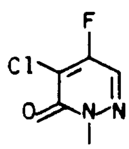 | 4-$SO_3H$ | 3 | blaust. rot |
| 22 | 5- 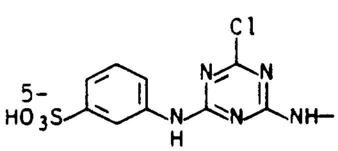 | 2-$SO_3H$ | 4 | neutralrot |
| 23 | 5- 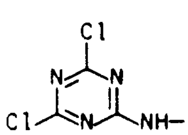 | 2-$SO_3H$ | 4 | neutralrot |

Tabelle 1 (Forts.)

| Beisp. Nr. | A | R | 3-/4-$SO_3H$ | Farbton auf Baumwolle |
|---|---|---|---|---|
| 24 | 4- 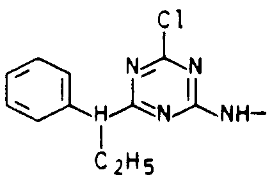 | 2-$SO_3H$ | 3 | violett |
| 25 | 5- 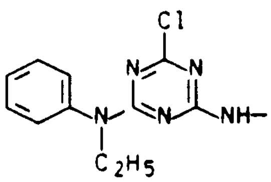 | H | 3 | violett |

Aus je einem Äquivalent 1-Aminonapht-8-ol-3,6-disulfonsäure und Cyanurchlorid sowie aus einem weiteren Äquivalent 1-Aminonaphth-8-ol-4,6-disulfonsäure wurde nach den Angaben des Beispiels 1a ein gemischt substituiertes 2,6-Diamino-4-chlor-s-triazin erhalten. Die Farbtöne der mit den Diazokomponenten der bisherigen Beispiele und dieser Kupplungskomponente erhaltenen Farbstoffe liegen zwischen denen der bereits beschriebenen symmetrischen Farbstoffe. So liegt z.B. der Farbton des Bsp. 26 zwischen denen der Beispiele 1 und 3 und stellt ein leicht blaustichiges Rot dar. Die Fixierausbeuten und Naßechtheiten sind denen der bisherigen Beispiele vergleichbar.

Die in der folgenden Tabelle 2 aufgeführten Farbstoffe gehorchen der Formel

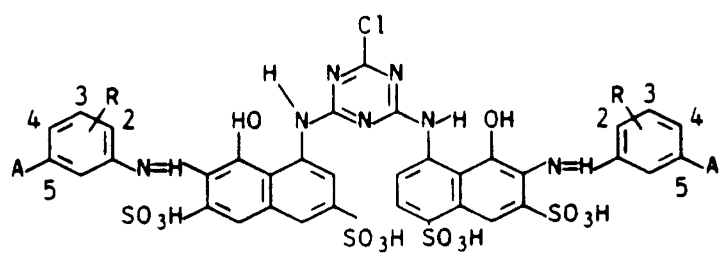

Tabelle 2

| Beisp. Nr. | A | R |
|---|---|---|
| 26 | 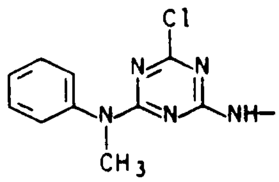 | 2-$SO_3H$ |
| 27 | 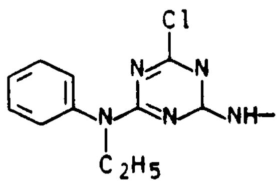 | 2-$SO_3H$ |
| 28 | 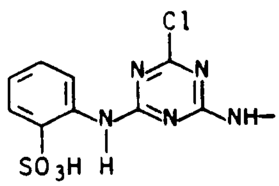 | 2-$SO_3H$ |
| 29 | 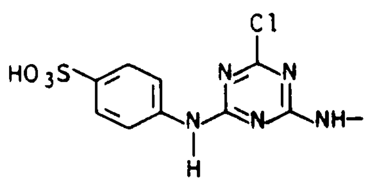 | 2-$SO_3H$ |
| 30 | 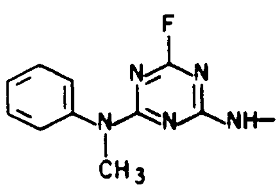 | 2-$SO_3H$ |
| 31 | 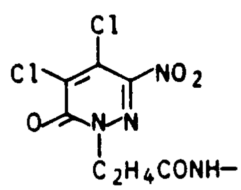 | 2-$SO_3H$ |
| 32 | 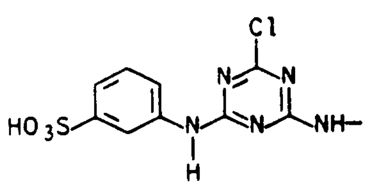 | 2-$SO_3H$ |

Tabelle 2

| Beisp. Nr. | A | R |
|---|---|---|
| 33 | 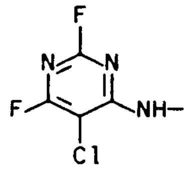 | 2-$SO_3H$ |
| 34 | 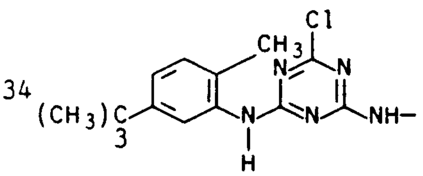 | 2-$SO_3H$ |
| 35 | 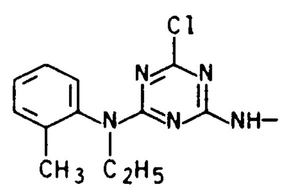 | 2-$SO_3H$ |

Beispiel 33

119,5 g 2-Aminonaphth-5-ol-7-sulfonsäure-Natriumsalz wurden in 1000 ml Wasser gelöst. Diese Lösung ließ man zu einer Aufschlämmung von 90 g Cyanurchlorid in 750 ml Eiswasser fließen und stellte den pH-Wert mit Natriumhydrogencarbonat auf 3 ein. Nach einstündigem Rühren bei 0 bis 5 °C wurde filtriert und dem Filtrat die gleiche Menge (wie oben beschrieben) 2-Aminonaphth-5-ol-7-sulfonsäure-Natriumsalz als Lösung zugegeben. Mit Natriumhydrogencarbonat wurde ein pH-Wert von 6 eingestellt und über Nacht bei Raumtemperatur gerührt, wonach die Kondensation beendet war.

Durch Kupplung eines Zehntels dieses Ansatzes mit dem Diazoniumsalz aus 47,3 g 2-(4'-Hydroxysulfonylphenylamino)-4-chlor-6-(3'-amino-4'-hydroxysulfonylphenylamino)-s-triazin analog Beispiel 1b wurde der Farbstoff der Formel

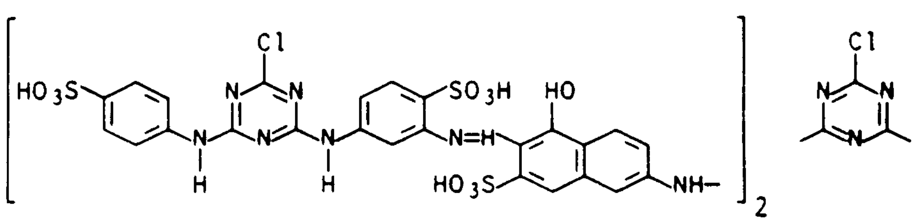

erhalten, der Cellulosematerial aus alkalischem Bad und bei erhöhter Temperatur in orangen Tönen mit hoher Fixierausbeute und von hoher Naßechtheit färbt.

Die in Tabelle 3 aufgeführten und in analoger Weise erhaltenen Farbstoffe färben Cellulose in ebensolchem Farbton mit vergleichbaren Eigenschaften.

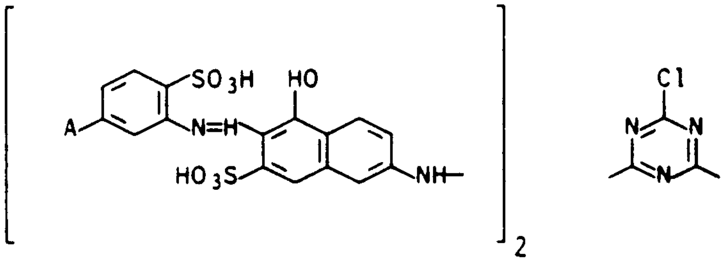

Tabelle 3

| Beisp. Nr. | A |
|---|---|
| 37 | 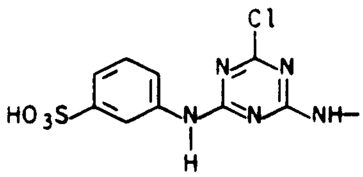 |
| 38 | 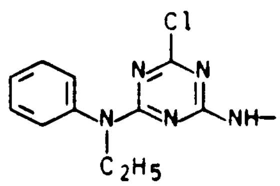 |
| 39 | 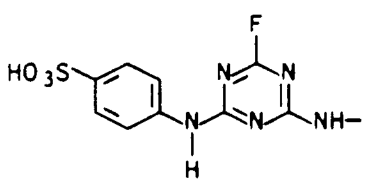 |
| 40 | 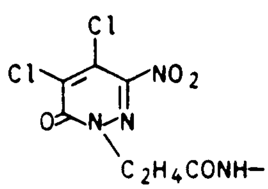 |

Tabelle 3 (Forts.)

| Beisp. Nr. | A | R |
|---|---|---|
| 41 | 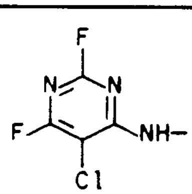 | 2-$SO_3H$ |

Aus je einem Äquivalent 1-Amino-naphth-8-ol-3,6-disulfonsäure oder 1-Aminonaphth-8-ol-4,6-disulfonsäure und Cyanurchlorid und einem Äquivalent 2-Aminonaphth-5-ol-7-sulfonsäure wurden nach den Angaben des Beispiels 1a weitere unsymmetrische, binäre Kupplungskomponenten erhalten, die analog der oben beschriebenen Verfahrensweise die in Tabelle 4 aufgeführten Farbstoffe ergaben, die ebenfalls hohe Fixierausbeuten und gute Naßechtheiten aufweisen.

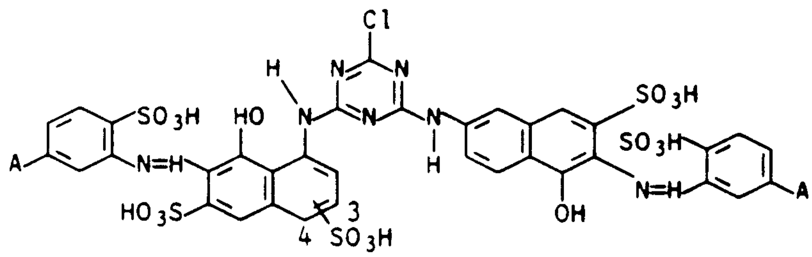

Tabelle 4

| Beisp. Nr. | A | 3-/4-$SO_3H$ | Farbton auf Baumwolle |
|---|---|---|---|
| 42 | 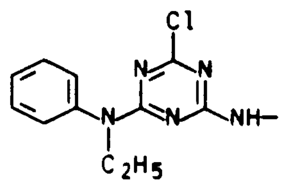 | 3 | rot |
| 43 | 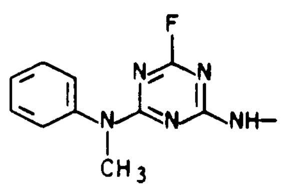 | 3 | rot |
| 44 | 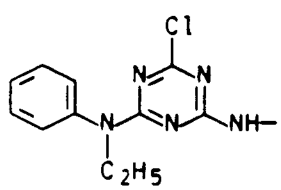 | 4 | gelbstichig rot |

Tabelle 4 (Forts.)

| Beisp. Nr. | A | 3-/4-$SO_3H$ | Farbton auf Baumwolle |
|---|---|---|---|
| 45 | 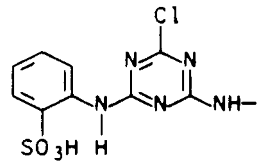 | 4 | gelbstichig rot |
| 46 | 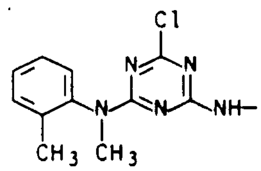 | 3 | rot |
| 47 | 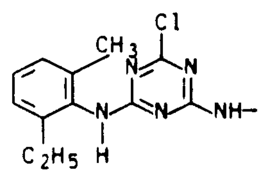 | 3 | rot |
| 48 | 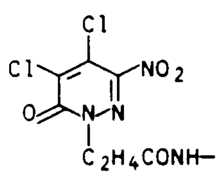 | 3 | rot |
| 49 | 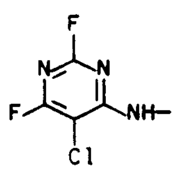 | 4 | gelbst. rot |
| 50 | 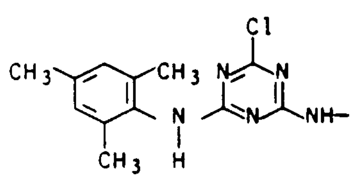 | 4 | gelbst. rot |
| 51 | 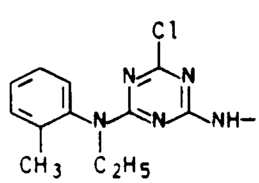 | 4 | gelbst. rot |

Tabelle 4 (Forts.)

| Beisp. Nr. | A | 3-/4-$SO_3H$ | Farbton auf Baumwolle |
|---|---|---|---|
| 52 | 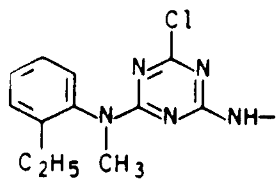 | 4 | gelbst. rot |

## Patentansprüche

**1.** Reaktivfarbstoffe, die drei reaktive Gruppen aufweisen und der Formel I

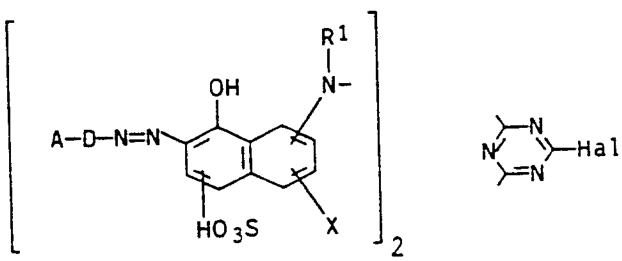

(I)

gehorchen, in der

- $R^1$ Wasserstoff, Methyl oder Ethyl,
- X Wasserstoff oder Hydroxysulfonyl,
- Hal Fluor oder Chlor,
- D Phenylen, durch Carboxy oder Hydroxysulfonyl ein- oder zweifach substituiertes Phenylen oder durch Hydroxysulfonyl ein- oder zweifach substituiertes Naphthylen und
- A einen Rest der Formeln

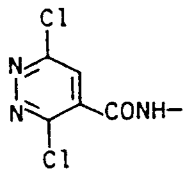 , 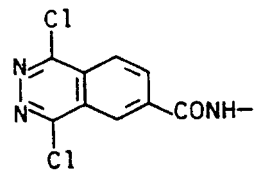 , 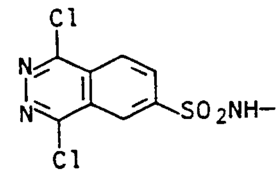

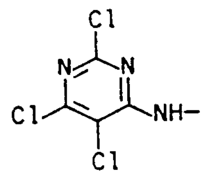 , 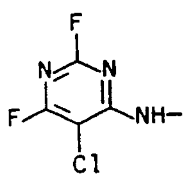 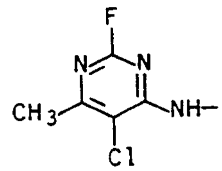 , 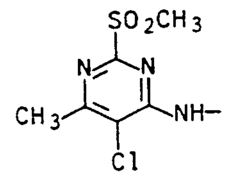 ,

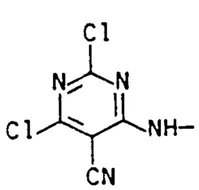 , 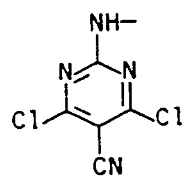 , 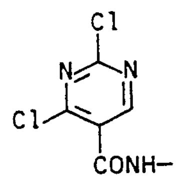 ,

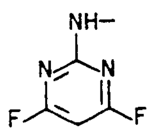 , 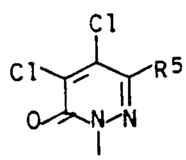 , 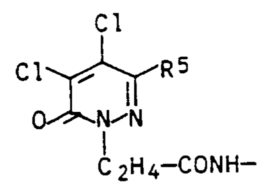 ,

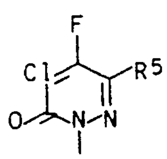 , 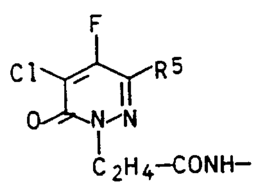 , 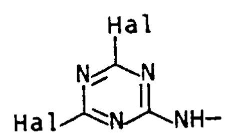 ,

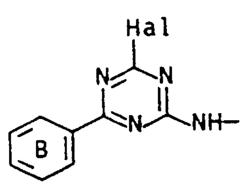 , oder 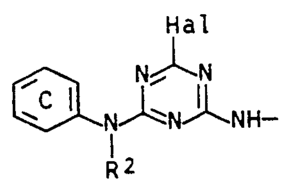 ,

wobei Hal für Fluor oder Chlor, $R^5$ für Wasserstoff oder Nitro und $R^2$ für Wasserstoff oder $C_1$-$C_4$-Alkyl stehen und die Ringe B und C jeweils durch einen Hydroxysulfonylrest und der Ring C davon unabhängig durch Chlor, Nitro, bis zu zwei Methoxygruppen oder bis zu drei $C_1$-$C_4$-Alkygruppen substituiert sein können, oder der Rest A - D zusammen einen Rest der Formel

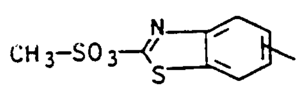 oder 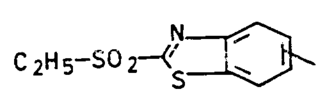

bedeuten.

2. Reaktivfarbstoffe gemäß Anspruch 1, die der Formel Ia

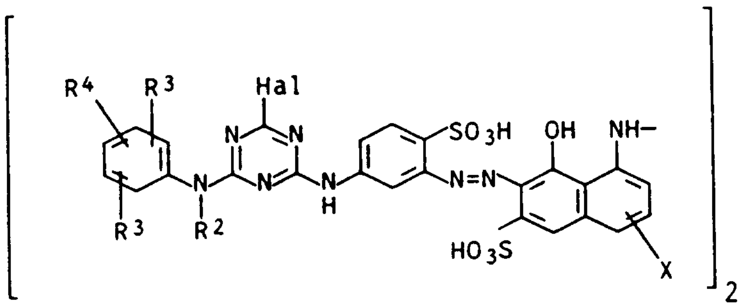 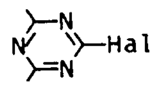 (Ia)

gehorchen, in der

Hal Fluor oder Chlor,
$R^2$ Wasserstoff oder $C_1$-$C_4$-Alkyl,
X Wasserstoff oder Hydroxysulfonyl,
$R^3$ Wasserstoff, $C_1$-$C_4$-Alkyl oder $C_1$-$C_4$-Alkoxy und
$R^4$ Wasserstoff, $C_1$-$C_4$-Alkyl oder Hydroxysulfonyl bedeuten.

3. Reaktivfarbstoffe gemäß Anspruch 1, die der Formel Ib

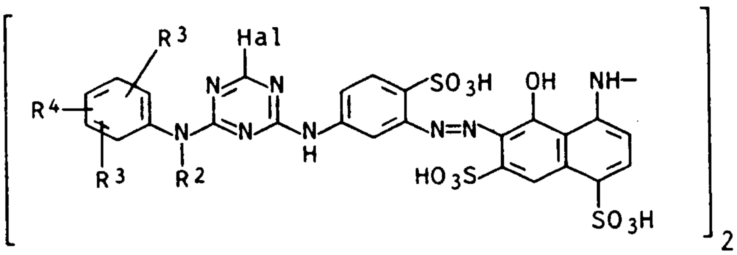 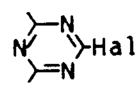 (Ib)

gehorchen, in der
$R^2$, $R^3$, $R^4$ und Hal jeweils die in Anspruch 2 genannte Bedeutung besitzen.

4. Verwendung der Reaktivfarbstoffe gemäß Anspruch 1 zum Färben oder Bedrucken von Hydroxygruppen oder Stickstoff enthaltenden Substraten.

## Claims

1. A reactive dye which possesses three reactive groups and conforms to the formula I

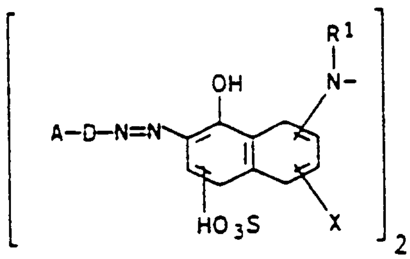 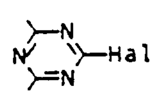 (I)

where

$R^1$ is hydrogen, methyl or ethyl,
X is hydrogen or hydroxysulfonyl,
Hal is fluorine or chlorine,
D is phenylene, carboxyl- or hydroxysulfonyl-monosubstituted or -disubstituted phenylene or

hydroxysulfonyl-monosubstituted or -disubstituted naphthylene, and

A is a radical of the formula

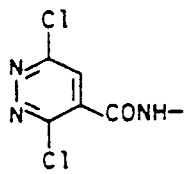 , 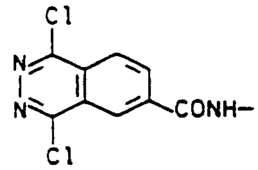 , 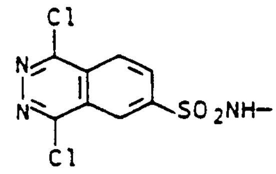

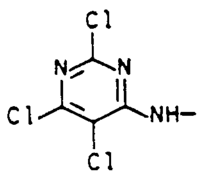 , 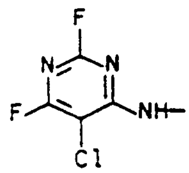 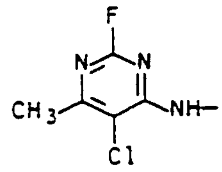 , 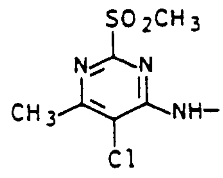 ,

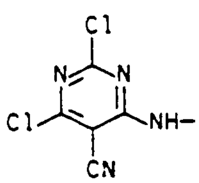 , 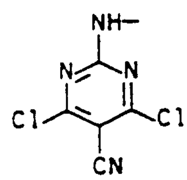 , 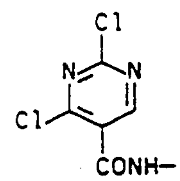 ,

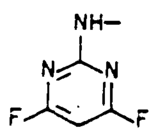 , 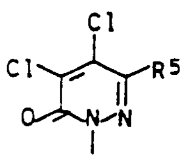 , 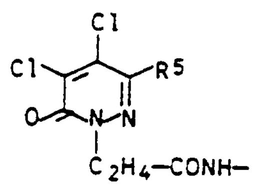 ,

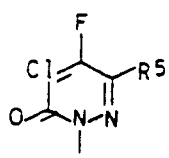 , 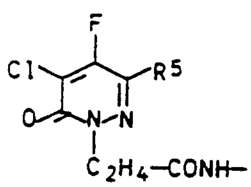 , 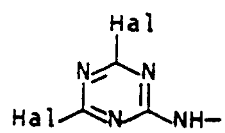 ,

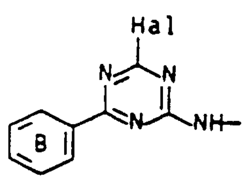 , or 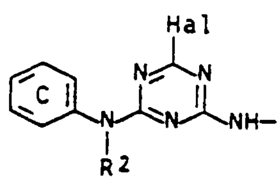 ,

where Hal is fluorine or chlorine, $R^5$ is hydrogen or nitro, $R^2$ is hydrogen or $C_1$-$C_4$-alkyl, the rings B and C may each be substituted by hydroxysulfonyl, and independently thereof the ring C may be substituted by chlorine, nitro, by up to two methoxy groups or by up to three $C_1$-$C_4$-alkyl groups, or the radical A-D together is a radical of the formula

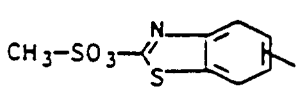 or 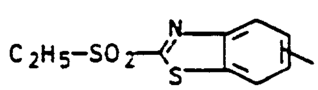

2. A reactive dye as claimed in claim 1, which conforms to the formula Ia

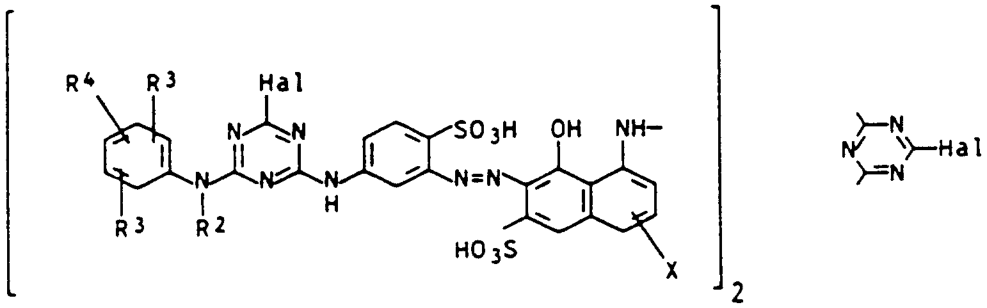
(Ia)

where

Hal is fluorine or chlorine,
$R^2$ is hydrogen or $C_1$-$C_4$-alkyl,
X is hydrogen or hydroxysulfonyl,
$R^3$ is hydrogen, $C_1$-$C_4$-alkyl or $C_1$-$C_4$-alkoxy and
$R^4$ is hydrogen, $C_1$-$C_4$-alkyl or hydroxysulfonyl.

3. A reactive dye as claimed in claim 1, which conforms to the formula Ib

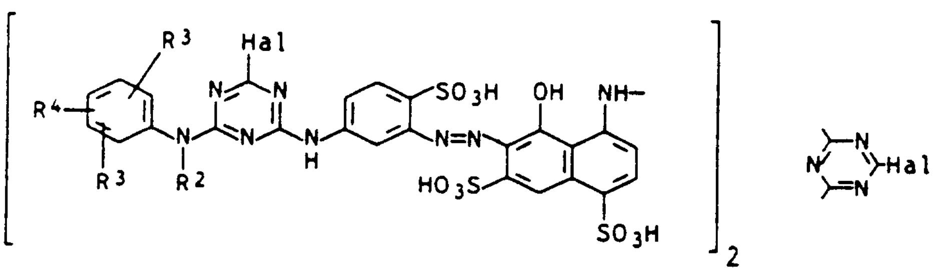
(Ib)

where
$R^2$, $R^3$, $R^4$ and Hal are each as defined in claim 2.

4. The use of a reactive dye as claimed in claim 1 for dyeing or printing hydroxyl- or nitrogen-containing substrates.

**Revendications**

1. Colorants réactifs, qui comportent trois groupements réactifs et répondent à la formule I

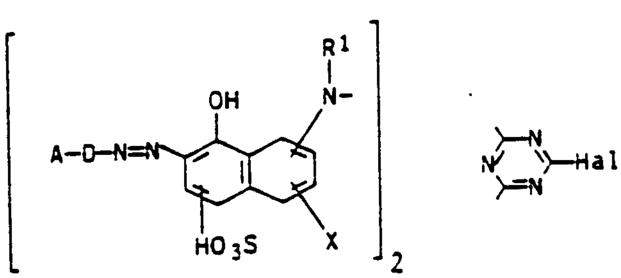
(I)

dans laquelle

$R^1$ représente un atome d'hydrogène ou un reste méthyle ou éthyle,
X représente un atome d'hydrogène ou un groupement hydroxysulfonyle,
Hal représente un atome de fluor ou de chlore,
D représente un reste phénylène, un reste phénylène substitué une ou deux fois par des groupements carboxyle ou hydroxysulfonyle, ou un reste naphtylène substitué une ou deux

fois par des groupements hydroxysulfonyle, et

A représente un reste de formule

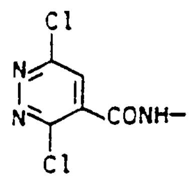 , 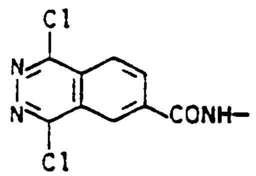 , 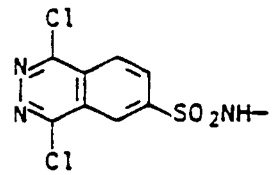

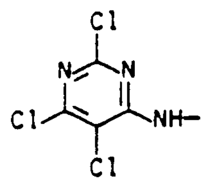 , 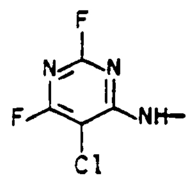 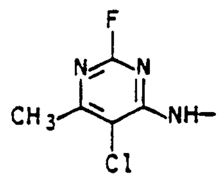 , 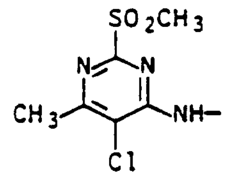 ,

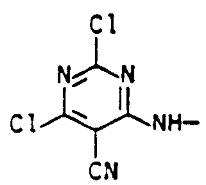 , 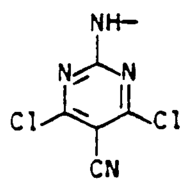 , 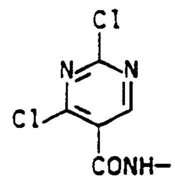 ,

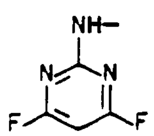 , 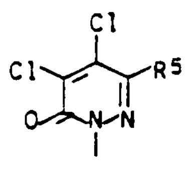 , 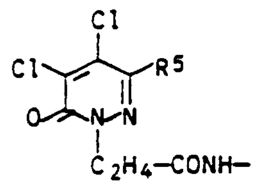 ,

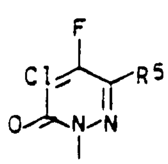 , 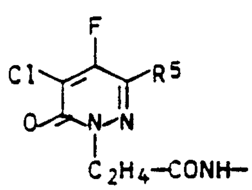 , 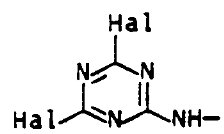 ,

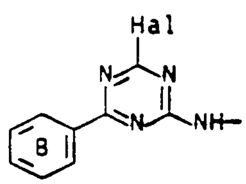 , ou 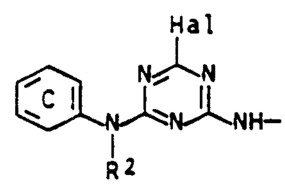 ,

où Hal est mis pour un atome de fluor ou de chlore, $R^5$ pour un atome d'hydrogène ou un groupement nitro et $R^2$ pour un atome d'hydrogène ou un reste alkyle en $C_1$-$C_4$, les noyaux B et C peuvent être substitués chacun par un reste hydroxysulfonyle, le noyau C peut être substitué, indépendamment de cela, par un atome de chlore, un groupement nitro, jusqu'à deux groupements méthoxy ou jusqu'à trois groupements alkyle en $C_1$-$C_4$, ou bien les restes A - D représentent ensemble un reste de formule

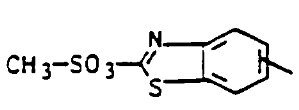 ou 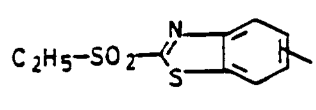

**2.** Colorants réactifs selon la revendication 1, qui répondent à la formule Ia

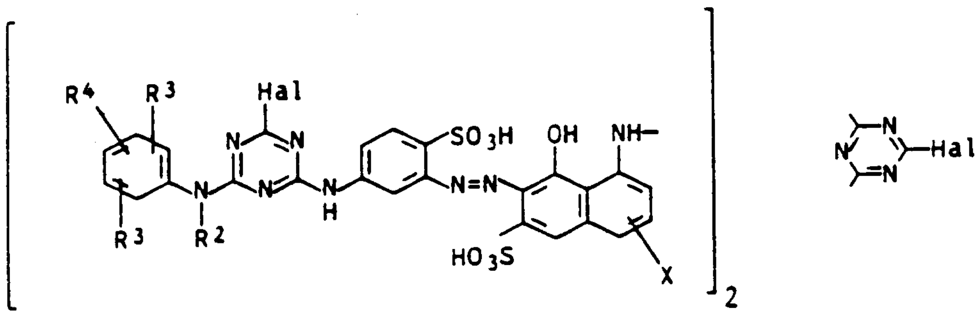 (Ia)

dans laquelle

Hal représente un atome de fluor ou de chlore,
$R^2$ représente un atome d'hydrogène ou un reste alkyle en $C_1$-$C_4$,
X représente un atome d'hydrogène ou un groupement hydroxysulfonyle,
$R^3$ représente un atome d'hydrogène ou un reste alkyle en $C_1$-$C_4$ ou alcoxy en $C_1$-$C_4$ et
$R^4$ représente un atome d'hydrogène ou un reste alkyle en $C_1$-$C_4$ ou hydroxysulfonyle.

**3.** Colorants réactifs selon la revendication 1, qui répondent à la formule Ib

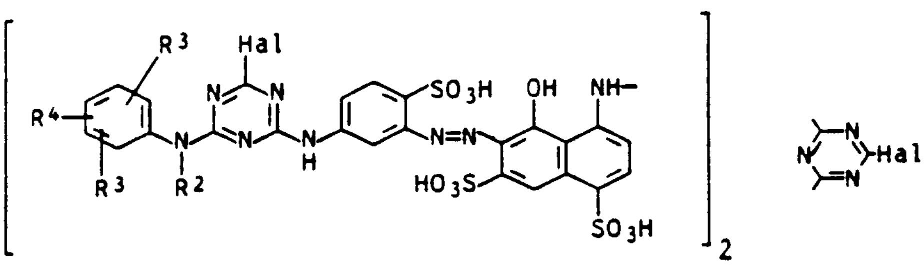 (Ib)

dans laquelle
$R^2$, $R^3$, $R^4$ et Hal ont chacun la signification donnée dans la revendication 2.

**4.** Utilisation des colorants réactifs selon la revendication 1 pour la teinture ou l'impression de substrats contenant des groupements hydroxy ou de l'azote.